Europäisches Patentamt

European Patent Office

Office européen des brevets

(19)

(11) Veröffentlichungsnummer : **0 484 636 B1**

(12) **EUROPÄISCHE PATENTSCHRIFT**

(45) Veröffentlichungstag der Patentschrift :
03.11.93 Patentblatt 93/44

(51) Int. Cl.$^5$ : **B01J 47/08, C02F 1/42**

(21) Anmeldenummer : **91112628.2**

(22) Anmeldetag : **26.07.91**

(54) **Verfahren und Anlage zum In-situ-Dekontaminieren von mit Schwermetallen belastetem Grundwasser.**

(30) Priorität : **05.11.90 DE 4035110**

(43) Veröffentlichungstag der Anmeldung :
**13.05.92 Patentblatt 92/20**

(45) Bekanntmachung des Hinweises auf die
Patenterteilung :
**03.11.93 Patentblatt 93/44**

(84) Benannte Vertragsstaaten :
**AT BE CH DE DK ES FR GB GR IT LI LU NL SE**

(56) Entgegenhaltungen :
**EP-A- 0 328 993**
**WO-A-91/01392**
**DE-A- 3 842 740**
**DE-U- 9 005 565**
**GB-A- 2 150 597**
**DERWENT JAPANESE PATENTS REPORT,**
**Derwent PublicationsLtd., London, GB;**

(73) Patentinhaber : **SANTEC GMBH**
**Ingenieurbüro für Sanierungstechnologien,**
**Moosrosenstrasse 25**
**D-12347 Berlin (DE)**

(72) Erfinder : **Hundenborn, Bernd**
**Wünsdorfer Strasse 95**
**W-1000 Berlin 49 (DE)**
Erfinder : **Theissen, Hubert**
**Lipaerstrasse 27**
**W-1000 Berlin 45 (DE)**

(74) Vertreter : **Patentanwälte Leinweber &**
**Zimmermann**
**Rosental 7/II Aufg.**
**D-80331 München (DE)**

## Beschreibung

Die Erfindung bezieht sich auf ein Verfahren zum Insitu-Dekontaminieren von mit Schwermetallen belastetem Grundwasser unter Verwendung eines Ionentauschers sowie auf eine Anlage zur Durchführung dieses Verfahrens (DE 38 42 740 A1).

Aus der DE 38 42 740 A1 sind ein Verfahren sowie eine Anlage der eingangs genannten Art bekannt. Dabei wird das Wasser mittels einer Unterwasserpumpe in bzw. durch den Ionentauscher gepumpt. Es ist schwierig, die Unterwasserpumpe zu installieren, weil sie unterhalb des Grundwasserspiegels liegen muß.

Der Erfindung liegt die Aufgabe zugrunde, das Verfahren bzw. die Vorrichtung der eingangs genannten Art insoweit weiter zu bilden, als sich die Installation einer Pumpe, insbesondere unterhalb des Wasserspiegels erübrigt.

Diese Aufgabe wird erfindungsgemäß durch die in den Ansprüchen gekennzeichnete Erfindung gelöst.

Durch das erfindungsgemäße Verfahren und die erfindungsgemäße Anlage wird erreicht, daß das Grundwasser in möglichst laminarer Strömung an einem Ionentauscher vorbeiströmt. Durch Anlage eines entsprechenden Spannungsgradienten werden die Schwermetallionen an eine Ionentauschermasse herangeführt. Diese zeichnet sich dadurch aus, daß sie zum Schwermetallion eine höhere Affinität hat als zu ihren Beladungsionen. Dadurch wird erreicht, daß die die Ionentauschermasse erreichenden Schwermetallionen in dieser festgehalten werden. In regelmäßigen Abständen kann der Ionentauscher ausgetauscht und/oder extern regeneriert werden.

Weitere Einzelheiten, Vorteile und Merkmale der Erfindung ergeben sich aus der folgenden Beschreibung und der Zeichnung, auf die wegen der erfindungswesentlichen Offenbarung aller im Text nicht näher beschriebenen Einzelheiten ausdrücklich verwiesen wird. Es zeigen:

Fig. 1     eine schematische Schnittansicht durch einen Bodenbereich mit eingesetztem Schwermetall-Dekontaminierbrunnen,

Fig. 2     eine Teilansicht bei Kreis A von Fig. 1,

Fig. 3     eine Teilansicht bei Kreis B von Fig. 1.

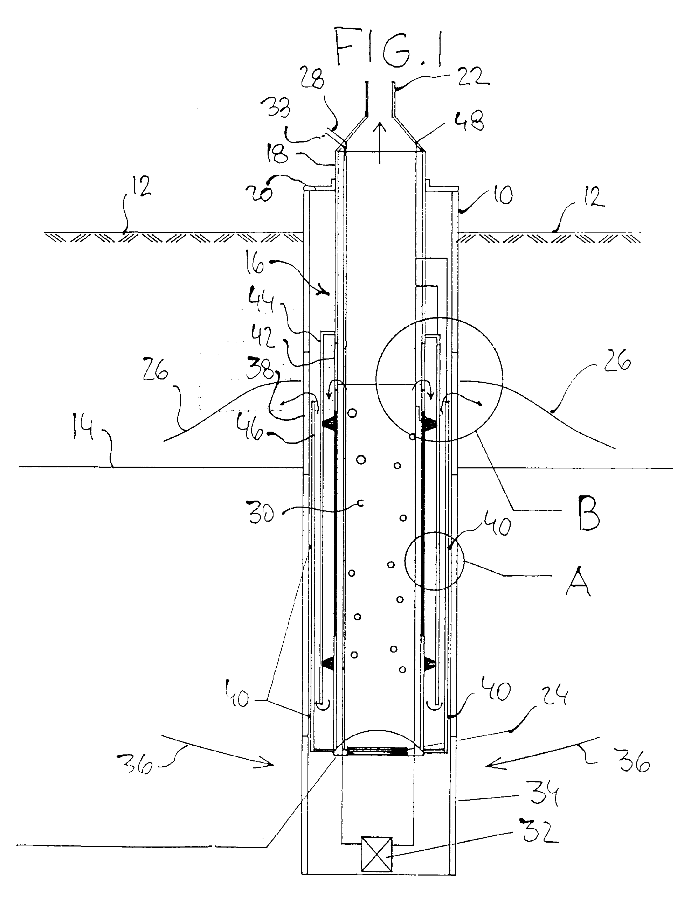

Fig. 1 zeigt ein in den Boden gesenktes Brunnenrohr 10, das über die Geländeoberkante 12 etwas vorsteht, mit seinem abgeschlossenen unteren Ende aber weit unter den Grundwasserspiegel 14 hinunterreicht.

In das Innere des Brunnenrohres 10 ist höhenverstellbar und konzentrisch ein Ionentauschereinsatz 16 eingesetzt. Dieser weist ein Innenrohr 18 auf, das über eine das Brunnenrohr 10 oben abschließende Einsatzhalterung (und weiter unten noch erläuterte aufblasbare Dichtungen) in seiner konzentrischen Lage fixiert ist. Das Innenrohr wird oben durch einen Abluftkonus 22 abgeschlossen und weist an seinem unteren Ende einen Begaser 24 auf, der durch den von ihm aufgebauten Druck im Bereich des Schwermetall-Dekontaminierungsbrunnens einen Grundwasserberg 26 aufbaut, in dessen Bereich der Grundwasserspiegel über dem natürlichen Grundwasserspiegel 14 liegt, wie das die Figur zeigt.

Hierfür wird dem Begaser 24 über eine Gaszufuhrleitung 28 entsprechendes Frischgas zugeführt. Dabei kann es sich einfach um Luft handeln. Über dem Begaser 24 steigen dann im Inneren des Innenrohr 18 Gasperlen 30 auf und reißen das hier befindliche Wasser so mit, daß der oben erläuterte Grundwasserberg 26 entsteht.

Unter dem Begaser 24 ist noch ein Schlammfang 32 mit Schlammpumpe angeordnet, dem die notwendige elektrische Energie über eine Kabelführung 33 zugeführt wird.

Außerhalb des Begasers 24 ist das Innenrohr 18 an seinem unteren Ende offen. Hier entsteht wegen der im Inneren des Innenrohrs nach oben gerichteten Strömung eine Sogwirkung auf das Grundwasser, wie durch Pfeile 36 angedeutet. Es fließt also Grundwasser 35 durch entsprechende Öffnungen nach, die im unteren Bereich des Brunnenrohres 10 unterhalb des unteren Endes des Ionentauschereinsatzes 16 angeordnet und als Vorfilter 34 ausgebildet sind. Das Brunnenrohr 10 weist aber nicht nur die Vorfilter 34 für die Zuströmung des Grundwassers auf. Es ist überdies in der Höhe der Ausströmöffnungen des Ionentauschereinsatzes 16 auch mit Abströmöffnungen 38 versehen, über die der Grundwasserberg oberhalb der Grundwasseroberfläche 14 wieder in den Boden abfließen kann. Aufblasbare Dichtungen 40 sind auf die in der Figur gezeigte Weise zwischen das Brunnenrohr 10 und die Außenwand des Ionentauschereinsatzes 16 eingesetzt, um diesen zu zentrieren und Parasitärströmungen zu vermeiden, die den Wirkungsgrad der Schwermetall-Dekontaminierung etwas verringern könnten.

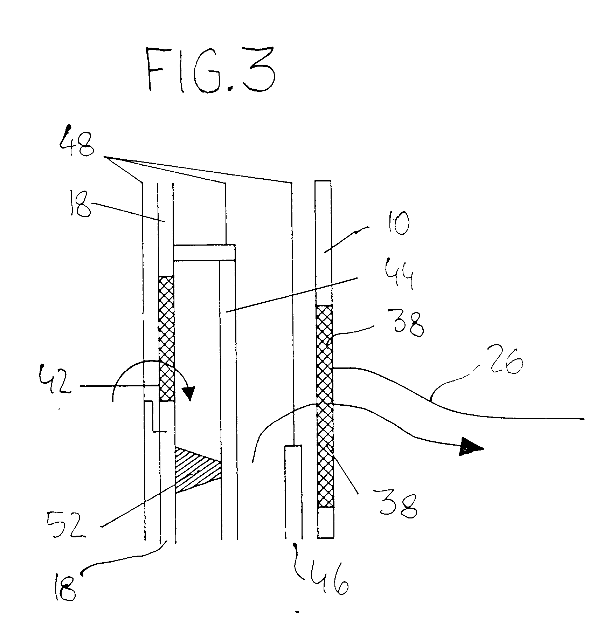

Wie aus Fig. 1 und noch besser aus Fig. 3 zu erkennen, weist auch das Innenrohr 18 im Bereich des Grundwasserberges 26 Überströmöffnungen in Form von Überströmschlitzen 42 auf. Zum besseren Verständnis des Strömungsverhaltens soll im folgenden zunächst der Aufbau des Ionentauschereinsatzes näher erläutert werden. Das Innenrohr 18 umgibt konzentrisch ein innerer Rohrabschnitt 44. Dieser ist oberhalb der Überströmschlitze 42 des Innenrohrs 18 durch einen kreisringförmigen Deckel 45 mit der Außenwand des Innenrohrs verbunden. Die zylindrische Wandung des inneren Rohrabschnittes 44 erstreckt sich von hier bis zum geschlossenen Boden des Ionentauschereinsatzes 16 und ist durch Abstandshalter 52 an der Außenwand des Innenrohrs abgestützt. Der innere Rohrabschnitt 44 weist nach allem einen entsprechend größeren Durchmesser auf als das Innenrohr 18. Der innere Rohrabschnitt 44 ist nun von einem äußeren Rohrabschnitt 46 umgeben, der unten durch einen Kreisringboden 47 mit dem Innenrohr 18 verbunden, oben jedoch offen ist. Das obere Ende des äußeren Rohrabschnittes 46 liegt im Bereich zwischen den Überströmschlitzen 42 des Innenrohrs 18 und den Abströmöffnungen 38 des Brunnenrohrs 10. Der Durchmesser des äußeren Rohrabschnittes 46 wird zweckmäßig so gewählt, daß der Strömungsquerschnitt zwischen dem äußeren Rohrabschnitt 46 und dem inneren Rohrabschnitt 44 gleich dem Strömungsquerschnitt zwischen dem Innenrohr 18 und dem inneren Rohrabschnitt 44 ist. Das bedeutet, daß der Durchmesserunterschied zwischen äußerem Rohrabschnitt 46 und innerem Rohrabschnitt 44 etwas kleiner sein muß als der Durchmesserunterschied zwischen dem inneren Rohrabschnitt 44 und dem Innenrohr 18.

Aus der obigen Erläuterung der Konstruktion das Ionentauschereinsatzes 16 ergibt sich, daß das im Bereich des Grundwasserberges 26 aus dem Innenrohr 18 in den Ionentauschereinsatz 16 überströmende Wasser durch eine Art Siphon in einer weitgehend laminaren Strömung durch den eigentlichen Ionentauscher 50 (vgl. Fig. 3) läuft. Durch den langen Strömungsweg wird eine hochwirksame Entnahme der Schwermetallionen möglich. Die Laminarströmung wird durch die Pfeile 54 und 56 angedeutet.

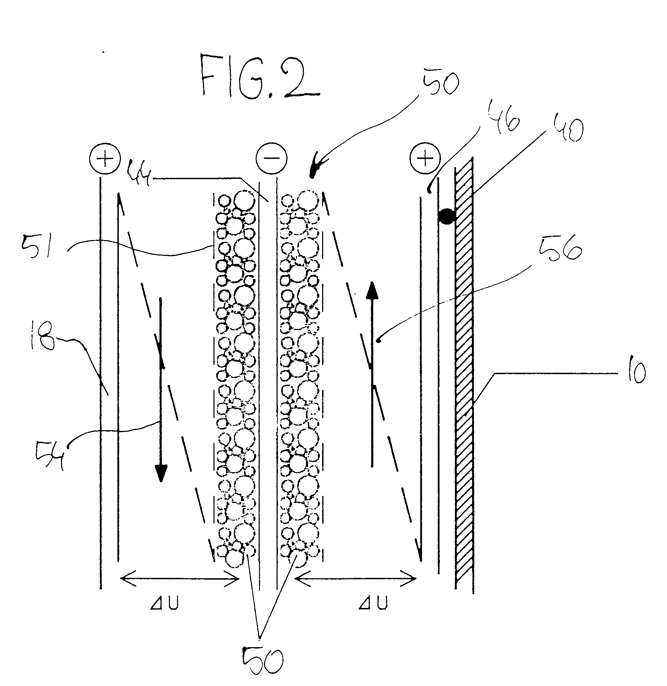

Fig. 3 zeigt den Aufbau des Ionentauschers im einzelnen. Mit Hilfe von Stromleitungen 48 wird an den Ionentauscher 50 ein Spannungsgradient $\Delta u$ angelegt, wie das die Figur 2 zeigt. Hierfür werden der äußere Rohrabschnitt 46 und das Innenrohr 18 auf das gleiche Potential gebracht, während der innere Rohrabschnitt 44 als Gegenelektrode dient. Diese Gegenelektrode wird nun zur Erzielung des Ionentausches mit einer Ionentauschermasse umgeben, die durch konzentrische Lochplatten aus nicht elektrisch leitfähigem Material im Bereich dieser Elektrode festgehalten wird. Als Ionentauschermasse wird eine solche verwendet, die eine höhere Affinität zu Schwermetallionen hat als zu den in der Ionentauschermasse zunächst vorhandenen Beladungsionen. Durch den Spannungsgradienten werden die Schwermetallionen veranlaßt, zur Ionentauschermasse zu wandern. Die Schwermetallionen können die Löcher der Lochplatten 51 leicht durchdringen, während der Lochdurchmesser kleiner gewählt ist als die Korngröße der Ionentauschermasse. Diese wird damit hier festgehalten.

Im einzelnen nun folgendes: Bei einer Strömungsgeschwindigkeit v (m/s) des Wassers durch den Siphon und bei einer Siphonhöhe (Abstand des unteren Endes des inneren Rohrabschnittes 44 vom oberen Ende des äußeren Rohrabschnittes 46) von h(m) beträgt die mittlere Verweilzeit eines Schwermetallions im Siphon t =2h/v(s). Damit nun ein Ion bei dieser vorgegebenen Verweilzeit zuverlässig auch die Maximalstrecke b des Elektrodenabstandes (Abstand Innenrohr 18 von innerem Rohrabschnitt 44 bzw. Abstand innerer Rohrabschnitt 44 vom äußeren Rohrabschnitt 46) durchwandern kann, muß bei einer Wanderungsgeschwindigkeit w ($m^2$/Vs) der angelegte Spannungsgradient $\Delta u$ = b/tw(V/m) sein. Es ist dann sichergestellt, daß sich innerhalb der Verweilzeit t sämtliche Schwermetallionen bis in die Ionentauschermasse des Ionentauschers 50 bewegen und hier festgehalten werden.

Bei kontinuierlichem Betrieb der Anlage mit einem solchen Spannungsgradienten kann sich an den Elektroden ein Gegenpotential aufbauen. Um dies zu verhindern, wäre ein intermittierender Betrieb wünschenswert. Deshalb kann alternativ die Anlage auch so gefahren werden, daß der Spannungsgradient ein Vielfaches des oben herausgestellten Grenzwertes für $\Delta u$ beträgt, also gilt $\Delta u' = n\Delta u$. Da damit die Wanderungsgeschwindigkeit um den Faktor n steigt, kann die Spannung während einer Zeit ((n-1)/n) t ausgeschaltet bleiben. Während der Ausschaltzeit wird das Gegenpotential abgebaut. Dennoch verhindert die Affinität der Ionentauschermasse zu den Schwermetallionen eine Rückdiffundierung der Schwermetallionen während der Ausschaltzeit in das vorbeiströmende Wasser.

Die Energieversorgung des Ionentauschers 50 ist so gebaut, daß nur sehr geringe Ströme fließen können. Dadurch wird ein Abscheiden des Schwermetalls an der Elektrode verhindert. Auf diese Weise ist der Ionentauschereinsatz 16, der in der Anlage austauschbar montiert ist, ohne weiteres regenerierbar.

Es liegt auf der Hand, daß die Bedingungen jeweils der Art der Schwermetallkontamination, der Leitfähigkeit des Wassers und seinem pH-Wert anzupassen sind.

Bezugszeichenliste

| | |
|---|---|
| 10 | Brunnenrohr |
| 12 | Geländeoberkante |
| 14 | Grundwasserspiegel |
| 16 | Ionentauschereinsatz |
| 18 | Innenrohr |
| 20 | Einsatzhalterung |

| 22 | Abluftkonus |
|---|---|
| 24 | Begaser |
| 26 | Grundwasserberg |
| 28 | Gaszufuhrleitung |
| 30 | Gasperlen |
| 32 | Schlammfang mit Schlammpumpe |
| 33 | Kabelführung |
| 34 | Vorfilter |
| 36 | Pfeil (Grundwasserströmung) |
| 38 | Abströmöffnungen |
| 40 | Dichtungen (aufblasbar) |
| 42 | Überströmschlitze |
| 44 | innerer Rohrabschnitt |
| 46 | äußerer Rohrabschnitt |
| 48 | Stromleitungen (für 50) |
| 50 | Ionentauscher |
| 51 | Lochplatten |
| 52 | Abstandshalter |
| 54,56 | Pfeile (Strömungsrichtung der Laminarströmung im Siphon) |

**Patentansprüche**

1. Verfahren zum In-situ-Dekontaminieren von mit Schwermetallen belastetem Grundwasser unter Verwendung eines Ionentauschers, gekennzeichnet durch folgende Verfahrensschritte,
   - Einleiten von unter Druck stehendem Gas in den Bodenbereich unterhalb des Grundwasserspiegels,
   - hierdurch örtliches Anheben des Grundwasserspiegels im Begasungsbereich zum Erzielen einer Grundwasserumwälzung,
   - Anlegen einer elektrischen Spannung an einen Teilbereich der durch die Grundwasserumwälzung bewirkten Grundwasserströmung,
   - Auffangen der unter Einfluß der elektrischen Spannung aus der Grundwasserströmung auswandernden Schwermetallionen in dem Ionentauscher.

2. Verfahren nach Anspruch 1, dadurch gekennzeichnet, daß der Spannungsgradient quer zur Grundwasserströmung ständig angelegt ist.

3. Verfahren nach Anspruch 1, dadurch gekennzeichnet, daß der Spannungsgradient quer zur Grundwasserströmung intermittierend angelegt ist.

4. Verfahren nach einem der Ansprüche 1 bis 3, dadurch gekennzeichnet, daß der Spannungsgradient ($\Delta$ u) einen Mindestwert von

$$\Delta u = b/tw \qquad (V/m)$$

hat, wobei
   b = der Abstand der Elektroden quer zur Strömungsrichtung (m)
   w = die Wanderungsgeschwindigkeit der Schwermetallionen ($m^2$/Vs)
   t = 2h/v = die mittlere Verweilzeit der Schwermetallionen im Siphon (s)
   h = die Siphonhöhe (m) und
   v = die Strömungsgeschwindigkeit im Siphon (m/s).

5. Verfahren nach Anspruch 4, dadurch gekennzeichnet, daß der Spannungsgradient ($\Delta$ u') ein Vielfaches des Mindestwertes hat ( $\Delta$ u' = n $\Delta$ u) ist und wegen der dadurch entsprechend angehobenen Wanderungsgeschwindigkeit der Schwermetallionen die Spannung an den Ionentauscher (50) nur intermittierend angelegt wird.

6. Anlage zur Durchführung des Verfahrens nach einem der Ansprüche 1 bis 5, gekennzeichnet
   - durch ein Brunnenrohr (10),
   - durch einen in das Brunnenrohr (10) eingesetzten Ionentauschereinsatz (16), bestehend aus einem Innenrohr (18) und einem konzentrisch zum Innenrohr aufgebauten Syphon, dessen Scheidewand (innerer Rohrabschnitt 44) eine Ionentauschermasse trägt und zwischen dessen Scheidewand einerseits und das Innenrohr (18) bzw. den als Außenwand des Siphons dienenden äußeren konzentrischen Rohrabschnitt (46) andererseits quer zur Strömungsrichtung ein Spannungsgradient (Δu) angelegt ist,
- durch einen am unteren Ende des Innenrohrs (18) angeordneten, zum Einführen von Gas in das Grundwasser und Aufbau eines Grundwasserberges (26) in diesem dienenden Begaser (24),
- durch Überströmschlitze (42) in der Wandung des Innenrohrs (18) zur Zufuhr des Grundwassers zum Siphon, und
- durch Abströmöffnungen (38) im Brunnenrohr im Bereich des Oberendes des äußeren Rohrabschnittes (46) zum Rückführen des im Ionentauscher (50) von Schwermetallen befreiten Grundwassers in den Boden.

7. Anlage nach Anspruch 6, dadurch gekennzeichnet, daß der gesamte Ionentauschereinsatz (16) zur externen Regenerierung austauschbar im äußeren Brunnenrohr (10) befestigt ist.

8. Anlage nach Anspruch 6 oder 7, dadurch gekennzeichnet, daß zwischen äußerem Brunnenrohr (10) und Ionentauschereinsatz (16) aufblasbare Dichtungen (40) angeordnet sind.

9. Anlage nach einem der Ansprüche 6 bis 8, dadurch gekennzeichnet, daß der Ionentauschereinsastz (16) aus Innenrohr (18) und hierzu konzentrischen Rohrabschnitten (44, 46) wie folgt aufgebaut ist:
- der innere Rohrabschnitt (44) endet unten zur Strömungsumlenkung um 180° vor dem verschlossenen Siphonboden und oben über den die Wandung des Innerohrs (18) durchbrechenden Überströmschlitzen (42),
- der äußere Rohrabschnitt (46) ist unten mit dem Siphonboden verbunden und endet oben offen im Bereich der Abströmöffnungen (38) des Brunnenrohrs (10),
- zwischen dem inneren Rohrabschnitt (44) einerseits und andererseits dem Innenrohr (18) und/oder dem äußeren Rohrabschnitt (46) sind Abstandshalter (52) vorgesehen.

10. Anlage nach einem der Ansprüche 6 bis 9, dadurch gekennzeichnet, daß die Ionentauschermasse an der Wandung des inneren Rohrabschnittes (44) durch zylindrische Lochplatten (51) gehalten ist.


**Claims**

1. Process for the in-situ decontamination of ground water charged with heavy metals, with the use of an ion exchanger, characterized by the following procedural steps:
- introduction of pressurized gas into the ground region below the ground-water level,
- hereby local lifting of the ground-water level in the gassing region to attain a circulation of ground water,
- application of an electrical potential to a partial region of the ground-water flow brought about by the ground-water circulation,
- collection in the ion exchanger of the heavy-metal ions coming out of the ground-water flow under the influence of the electrical potential.

2. Process according to claim 1, characterized in that the voltage gradient is constantly applied at right angles to the ground-water flow.

3. Process according to claim 1, characterized in that the voltage gradient is applied intermittently at right angles to the ground-water flow.

4. Process according to one of claims 1 to 3, characterized in that the voltage gradient (Δu) has a minimum value of

$$\Delta u = b/tw \qquad (V/m)$$

wherein

| | |
|---|---|
| b | = the distance of the electrodes at right angles to the direction of flow (m) |
| w | = the travelling speed of the heavy-metal ions ($m^2/Vs$) |
| t = 2h/v | = the average period of dwell of the heavy-metal ions in the siphon (s) |
| h | = the siphon height (m) |

and

v                          = the flow speed in the siphon (m/s).

5. Process according to claim 4, characterized in that the voltage gradient ($\Delta u'$) has a multiple of the minimum value ($\Delta u' = n \Delta u$) and because of the travelling speed of the heavy-metal ions thereby raised accordingly, the voltage is only applied intermittently to the ion exchanger (50).

6. Installation for carrying out the process according to one of claims 1 to 5, characterized
   - by a fountain pipe (10),
   - by an ion-exchanger insert (16), inserted into the fountain pipe (10), comprising an inner pipe (18) and a siphon constructed concentrically to the inner pipe, the partition wall (inner pipe section 44) of which siphon carries an ion-exchanger mass and between its partition wall on the one hand and the inner pipe (18) or the outer concentric pipe section (46) serving as outer wall of the siphon on the other hand, a voltage gradient ($\Delta u$) is applied at right angles to the direction of flow,
   - by a gasser (24) arranged at the lower end of the inner pipe (18) and serving to introduce gas into the ground water and construct a ground-water peak (26) therein,
   - by overflow slots (42) in the wall of the inner pipe (18) for supplying the ground water to the siphon, and
   - by downstream openings (38) in the fountain pipe in the region of the upper end of the outer pipe section (46) for returning the ground water freed from heavy metals in the ion exchanger (50) into the ground.

7. Installation according to claim 6, characterized in that for external regeneration the entire ion-exchanger insert (16) is fastened in the outer fountain pipe (10) so that it can be replaced.

8. Installation according to claim 6 or 7, characterized in that inflatable seals (40) are arranged between the outer fountain pipe (10) and the ion-exchanger insert (16).

9. Installation according to one of claims 6 to 8, characterized in that the ion-exchanger insert (16) is constructed from the inner pipe (18) and pipe sections (44,46) concentric thereto in the following manner:
   - the inner pipe section (44) ends at the bottom to the flow deflection by 180° in front of the closed siphon floor and at the top over the overflow slots (42) breaking through the wall of the inner pipe (18),
   - the outer pipe section (46) is connected at the bottom to the siphon floor and ends at the top open in the region of the downstream openings (38) of the fountain pipe (10),
   - spacers (52) are provided between the inner pipe section (44) on the one hand and on the other hand the inner pipe (18) and/or the outer pipe section (46).

10. Installation according to one of claims 6 to 9, characterized in that the ion-exchanger mass is held at the wall of the inner pipe section (44) by means of cylindrical aperture plates (51).

**Revendications**

1. Procédé pour la décontamination in-situ d'eau souterraine chargée de métaux lourds en utilisant un échangeur d'ions, caractérisé par les étapes de procédé consistant à:
   - introduire du gaz sous pression dans la zone de sol située en-dessous de la surface de la nappe souterraine,
   - soulever ainsi localement la surface de la nappe souterraine dans la zone contenant le gaz pour obtenir un bouleversement de l'eau souterraine,
   - application d'un potentiel électrique à une zone partielle du flux d'eau souterraine provoqué par le bouleversement de l'eau souterraine,
   - recueillir les ions de métaux lourds sortant du flux d'eau souterraine sous l'action du potentiel électrique dans l'échangeur d'ions.

2. Procédé selon la revendication 1, caractérisé en ce que le gradient de potentiel est appliqué en pennanence transversalement au flux d'eau souterraine.

**3.** Procédé selon la revendication 1, caractérisé en ce que le gradient de potentiel est appliqué, par intermittence, transversalement au flux d'eau souterraine.

**4.** Procédé selon l'une des revendications 1 à 3, caractérisé en ce que le gradient de potentiel ($\Delta u$) a une valeur minimale de $\Delta u = b/tw$ (V/m) dans laquelle:

b = l'écart des électrodes transversalement à la direction de flux (m).

w = la vitesse de migration des ions de métaux lourds (m²/Vs).

$t = 2h/v$ = la durée de séjour moyenne des ions de métaux lourds dans le siphon (s).

h = la hauteur de siphon (m).
et

v = la vitesse d'écoulement dans le siphon (m/s).

**5.** Procédé selon la revendication 4, caractérisé en ce que le gradient de potentiel ($\Delta u'$) représente un multiple de la valeur minimale ($\Delta u' = n\Delta u$), et en raison de la vitesse de migration des ions de métaux lourds qui est augmentée de façon correspondante, le potentiel est appliquée à l'échangeur d'ions (50) seulement par intermittence.

**6.** Installation pour la mise en oeuvre du procédé selon l'une des revendications 1 à 5, caractérisée :
- par un conduit appui (10),
- par un insert d'échangeur d'ions (16) placé dans le conduit appui (10), constitué d'un tube interne (18) et d'un siphon monté concentnquement par rapport au tube interne dont la paroi de séparation (section de tube interne 44) supporte une masse échangeuse d'ions, et entre la paroi de séparation de celui-ci, d'une part, et le tube interne (18) ou la section de tube (46) concentrique externe servant de paroi extérieure aux siphons, d'autre part, est appliqué un gradient de potentiel ($\Delta u$) transversalement à la direction du flux,
- par un dispositif d'introduction de gaz (24) disposé à l'extrémité inférieure du tube interne (18) conçu pour introduire du gaz dans l'eau souterraine et pour constituer un monticule d'eau souterraine (26) dans celui-ci,
- par des fentes de décharge ou de trop plein (42) dans la paroi du tube interne (18) pour l'amenée de l'eau souterraine au siphon, et
- par des ouvertures d'écoulement (38) dans le conduit à puits au voisinage de l'extrémité supérieure du tronçon de tube extérieur (46) pour ramener l'eau souterraine libérée des métaux lourds dans l'échangeur d'ions (50) dans le sol.

**7.** Installation selon la revendication 6, caractérisée en ce que l'ensemble de l'insert d'échangeur d'ions (16) est fixé pour la régénération externe de façon échangeable dans le conduit à puits externe (10).

**8.** Installation selon la revendication 6 ou 7, caractérisée en ce que des joints gonflables (40) sont disposés entre le conduit à puits externe (10) et l'insert d'échangeur d'ions (16).

**9.** Installation selon l'une des revendications 6 à 8, caractérisée en ce que l'insert d'échangeur d'ions (16) est constitué du tube interne (18) et de tronçons de tubes concentriques à celui-ci (44, 46) de la manière suivante:
- le tronçon de tube interne (44) se termine en bas pour la déviation du flux de 180° devant le fond fermé du siphon et en haut au-dessus des fentes de trop plein (42) traversant la paroi du tube interne (18),
- le tronçon de tube externe (46) est relié en bas au fond du siphon et se termine en haut, ouvert, au voisinage des ouvertures d'écoulement (38) du conduit à puits (10),
- entre le tronçon de tube interne (44), d'une part, et le tube interne (18) et/ou le tronçon de tube externe (46), d'autre part, sont prévues des pièces d'écartement (52).

**10.** Installation selon l'une des revendications 6 à 9, caractérisée en ce que la masse échangeuse d'ions est maintenue contre la paroi du tronçon de tube interne (44) par des plaques à trou cylindrique (51).

FIG.1

FIG.2

# FIG.3